# EUROPÄISCHE PATENTSCHRIFT

(11) **EP 2 285 865 B1**
(45) Veröffentlichungstag und Bekanntmachung des Hinweises auf die Patenterteilung: **24.06.2015**
(21) Anmeldenummer: 09745509.1
(22) Anmeldetag: 02.05.2009
(51) Int. Cl.: C08G 64/14

(54) **ALKYLPHENOL ZUR EINSTELLUNG DES MOLEKULARGEWICHTES UND COPOLYCARBONAT MIT VERBESSERTEN EIGENSCHAFTEN**
ALKYL PHENOL FOR ADJUSTING THE MOLECULAR WEIGHT AND COPOLYCARBONATE HAVING IMPROVED PROPERTIES
ALKYLPHÉNOL PERMETTANT DE RÉGLER LE POIDS MOLÉCULAIRE ET COPOLYCARBONATE PRÉSENTANT DES CARACTÉRISTIQUES AMÉLIORÉES

(30) Priorität: 15.05.2008 DE 102008023800
(43) Veröffentlichungstag der Anmeldung: 23.02.2011
(73) Patentinhaber: Bayer Intellectual Property GmbH, 40789 Monheim (DE)
(72) Erfinder: HEUER, Helmut-Werner, 47829 Krefeld (DE); WEHRMANN, Rolf, 47800 Krefeld (DE)
(74) Vertreter: BIP Patents
(86) Internationale Anmeldenummer: PCT/EP2009/003166
(87) Internationale Veröffentlichungsnummer: WO 2009/138175

(56) Entgegenhaltungen:
- DE-A1- 3 918 406
- DE-A1- 19 962 016
- DE-A1-102004 022 673

## Beschreibung

Die Erfindung betrifft Copolycarbonate mit enger Molekulargewichtsverteilung sowie Zusammensetzungen aus diesen Copolycarbonaten mit Additiven ausgewählt aus der Gruppe der Thermostabilisatoren und Entformungsmittel, deren Verwendung zur Herstellung von Formteilen und daraus erhältliche Formteile sowie die Verwendung von Alkylphenolen zur Einstellung des Molekulargewichtes von Copolycarbonaten.

Copolycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere thermische und mechanische Eigenschaften gefordert sind, beispielsweise Föhne, Anwendungen im Automobilbereich, Kunststoffabdeckungen, Streuscheiben oder Lichtleitelemente sowie Lampenabdeckungen oder Lampeneinfassungen (bezels).

Bei diesen Anwendungen werden praktisch immer die guten thermischen und mechanischen Eigenschaften wie Vicat-Temperatur (Wärmeformbeständigkeit) und Glastemperatur zwingend benötigt. Um die erhöhte Wärmeformbeständigkeit zu erzielen, muß man auf spezielle Bisphenole, die aufwendig zu synthetisieren und damit auch teuer sind, zurückgreifen.

Es ist bekannt, dass diese Eigenschaften bei Polymeren vom Molekulargewicht abhängig sind. Generell nehmen sie mit steigendem Molekulargewicht zu und nähern sich einem Grenzwert. Dabei ist aber nicht nur das Molekulargewicht an sich, sondern die molekulare Uneinheitlichkeit U = (Mw/Mn) - 1 von Bedeutung, da große Uneinheitlichkeiten sich negativ auf die thermischen und mechanischen Eigenschaften der Copolycarbonate auswirken. Weiterhin hat das Molekulargewicht einen direkten Einfluss auf die Viskosität (Lösungs- und Schmelzviskosität) und damit auf die Fließfähigkeit einer polymeren Schmelze bei gegebener Verarbeitungstemperatur. Hochmolekulare Produkte fließen jedoch schlechter und lassen sich daher nur mit deutlich geringeren Zykluszeiten verarbeiten. Um auch bei niedrigerem Molekulargewicht die notwendige Mechanik und Wärmeformbeständigkeit zu erfüllen ist daher dieser Weg nicht gangbar. Weiterhin ist bekannt, dass niedermolekulare Verbindungen und Oligomere sich negativ auf die thermischen und mechanischen Eigenschaften der Copolycarbonate auswirken.

Alkylphenole, insbesondere p-tert. Butylphenol (im Folgenden vereinfacht BUP genannt), als Kettenabbrecher zur Herstellung von Polycarbonat sind bekannt WO 01/51541, EP-A 1,249,463 und WO 2004/063249). Die zitierten Schriften beschreiben jedoch weder Polycarbonate mit einer definierten Molekulargewichtsverteilung noch die Verwendung von Alkylphenolen zur Herstellung von Copolycarbonat mit einer definierten Molekulargewichtsverteilung. Insbesondere war kein Hinweis auf den Einfluss des Kettenabbrechers auf die molekulare Uneinheitlichkeit bei gegebener Copolymerzusammensetzung bei Verwendung von Phenol als Kettenabbrecher noch auf die Vicat-Temperatur zu entnehmen.

DE 10 2004 022 673 A1 offenbart ein Copolycarbonat, welches aus Bisphenol TMC und 4,4'-Dihydroxydiphenylether sowie p-*tert*-Butylphenol als Kettenabbrecher nach einem Batch-Verfahren hergestellt wird. Aus DE 199 62 016 A1 und DE 39 18 406 A1 sind Copolycarbonate bekannt, welche nach einem Batch-Verfähren aus Bisphenol TMC, Bisphenol A und p*-tert-*Butylphenol bzw. Isooctylphenol als Kettenabbrecher hergestellt werden.

Es bestand daher die Aufgabe, aromatische Polycarbonate mit verbesserter Wärmeformbeständigkeit zu entwickeln sowie eine bei einer vorgegebenen/definierten Viskosität (Lösungs- bzw. Schmelzviskosität) Lösung zu ihrer Herstellung in einem Konti-Verfahren zu finden, bei der der Anteil niedermolekularer Verbindungen und Oligomere verringert wird, d. h. die Uneinheitlichkeit U = (Mw/Mn) - 1 kleiner wird, gleichzeitig die thermischen Eigenschaften (Vicat- und Glas-Temperatur) verbessert werden und die Menge an eingesetztem speziellen Hoch-Tg-Bisphenol geringer ist.

Überraschenderweise wurde gefunden, dass p-tert-Butylphenol, das als Kettenabbrecher bei der Herstellung von Polycarbonat eingesetzt wird einen entscheidenden Einfluss auf den Verlauf der GPC-Kurven, d.h. auf die Molekulargewichtsverteilung und damit auch auf den Anteil von zu vermeidenden niedermolekularen Verbindungen und Oligomeren hat und die Vicat-Temperatur bei gegebener Copolymerzusammensetzung erhöht werden kann. Diese Maßnahme zur gezielten Verbesserung der Molekulargewichtsverteilung, d.h. engere Verteilung bzw. geringere Uneinheitlichkeit U = (Mw/Mn) -1 und deren Einstellung und Abhängigkeit von der Art des Kettenabbrechers in einem Kontiprozeß nach dem Phasengrenzflächenverfahren, war bisher nicht bekannt. Außerdem wurde gefunden, dass zur Erreichung gleicher Vicat- oder Glastemperatur eine geringere Menge des speziellen Hoch-Tg-Bisphenols eingesetzt werden kann, wenn diese engere Molekulargewichtsverteilung auf die erfindungsgemäße Weise realisiert wird. Gleichzeitig stellt man dabei eine geringere Schmelzviskosität und damit ein verbessertes Verarbeitungsverhalten im Spritzguss der so erhaltenen Copolycarbonate fest.

Dies stellt ein wichtiges Kriterium für mechanische und thermische Performance des spritzgegossenen bzw. extrudierten Bauteils dar. Aus den erfindungsgemäßen Copolycarbonate und Copolycarbonat-Zusammensetzungen hergestellte Spritzgussteile oder Extrudate weisen signifikant verbesserte thermische Eigenschaften (Glastemperatur Tg sowie Vicat-Temperatur) auf.

Gegenstand der vorliegenden Erfindung sind Copolycarbonate enthaltend als Kettenabbrecher die Struktureinheit abgeleitet von
p-*tert.* Butylphenol
und mindestens einen Diphenolbaustein der Formel (2) 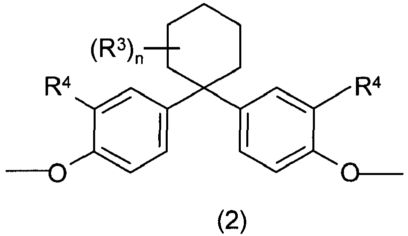 in der
R³ für C₁-C₄-Alkyl, bevorzugt Methyl,
R⁴ für Wasserstoff oder C₁-C₄-Alkyl, bevorzugt Methyl,
n für 0, 1, 2 oder 3, bevorzugt 2 oder 3 stehen,
und wenigstens eine Dihydroxyarylverbindung der Formel (3)

   HO-Z-OH (3)

   in welcher
Z für einen Rest der Formel (3 a) steht 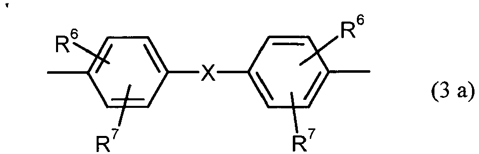 in der
   - R⁶ und R⁷: unabhängig voneinander für H, C₁-C₁₈-Alkyl-, C₁-C₁₈-Alkoxy, Halogen oder für jeweils gegebenenfalls substituiertes Aryl- oder Aralkyl,
   - X: für C₁- bis C₆-Alkylen, C₂- bis C₅-Alkyliden oder für C₆- bis C₁₂-Arylen, bevorzugt für C₁- bis C₅-Alkylen oder C₂- bis C₅-Alkyliden. Insbesondere für Isopropyliden steht;
   wobei die Copolycarbonate die folgenden Uneinheitlichkeiten aufweisen:
   A) Copolycarbonate mit einem Gehalt ≥ 50 mol % und < 100 mol % Diphenolbaustein der Formel (2) bezogen auf die Summe der Diphenole:
      für lineares CoPC mit einem mittleren Molekulargewicht (Gewichtsmittel) von 18.000 bis 35.000 g/mol beträgt U = (Mw/Mn)-1 gleich 1,3 bis 2,3, bevorzugt 1,4 bis 2,3, ganz besonders bevorzugt 1,5 bis 2,3,
   B) Copolycarbonate mit einem Gehalt größer 0 und kleiner 50 mol % Diphenolbaustein der Formel (2) bezogen auf die Summe der Diphenole:
      für lineares CoPC mit einem mittleren Molekulargewicht (Gewichtsmittel) von 16.000 bis 35.000 g/mol beträgt U = (Mw/Mn)-1 gleich 1,2 bis 2,4, bevorzugt 1,2 bis 2,2, besonders bevorzugt 1,2 bis 2,0, ganz besonders bevorzugt 1,2 bis 1,8;
und wobei die Copolycarbonate nach einem kontinuierlichen Phasengrenzflächenverfahren hergestellt wurden.

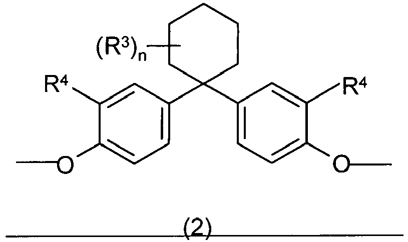

Die thermoplastischen Copolycarbonate haben die oben genannten Molekulargewichte M_{w} (Gewichtsmittel Mw, ermittelt durch Gelpermeationschromatographie (GPC) Messung, Polycarbonateichung). Molekulargewichte lassen sich auch durch die Zahlenmittel Mn angeben, welche ebenfalls nach vorheriger Eichung auf Polycarbonat mittels GPC bestimmt werden.

Die Uneinheitlichkeit U = (Mw/Mn) - 1 als Maß für die Molekulargewichtsverteilung der Copolycarbonate PC kann somit für verschiedene Molekulargewichtsbereiche ermittelt werden.

Gegenstand der vorliegenden Erfindung sind weiterhin Zusammensetzungen enthaltend
C) oben genanntes Copolycarbonat mit p-*tert*.-Butylphenol als Endgruppe, wobei je nach Molekulargewichtsbereich die Uneinheitlichkeit die oben angegebenen Werte aufweist und
D) mindestens ein Additiv ausgewählt aus der Gruppe bestehend aus Thermostabilisator, Entformungsmittel und UV-Stabilisator

Die Zusammensetzung enthält im Allgemeinen 0,001 bis 1, bevorzugt 0,005 bis 0,9,besonders bevorzugt 0,005 bis 0,8 Gew.-%, ganz besonders bevorzugt 0,04 bis 0,8 Gew.-%, insbesondere ganz besonders bevorzugt 0,04 bis 0,6 Gew.-% (bezogen auf die Gesamtzusammensetzung) Additive gemäß Komponente D).

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Trisoctylphosphat, Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)pentaerythritoldiphosphit (ADK STAB PEP-36) oder Triphenylphosphin. Sie werden allein oder im Gemisch (z. B. Irganox B900 oder Doverphos S-92228 mit Irganox B900 bzw. Irganox 1076) eingesetzt.

Als Entformungsmitttel eignen sich bevorzugt Pentaerythrittetrastearat, Glycerinmonostearat, Stearylstearat oder Propandiolmono- bzw. distearat. Sie werden allein oder im Gemisch eingesetzt.

Als UV-Stabilisatoren eignen sich bevorzugt 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine, besonders bevorzugt sind substituierte Benztriazole.

Die Copolycarbonate werden nach einem kontinuierlichen Phasengrenzflächenverfahren hergestellt. Die Herstellung der erfindungsgemäß zu verwendenden Copolycarbonate erfolgt prinzipiell in bekannter Weise aus Diphenolen, Kohlensäurederivaten und gegebenenfalls Verzweigern.

Allgemein ist das Verfahren zur Polycarbonatsynthese bekannt und in zahlreichen Publikationen beschrieben. EP-A 0 517 044, WO 2006/072344, EP-A 1 609 818, WO 2006/072344 und EP-A 1 609 818 und dort zitierte Dokumente beschreiben beispielsweise das Phasengrenzflächen und das Schmelzeverfahren zur Herstellung von Polycarbonat.

Aus dem Stand der Technik ist jedoch nicht ersichtlich, welche Maßnahmen bereits bei der Synthese getroffen werden müssen, um ein Polycarbonat in einem kontinuierlichen Verfahren mit sehr guter Kerbschlagzähigkeit und verbesserter Wärmeformbeständigkeit zu erhalten. Insbesondere war kein Hinweis auf den Einfluß des Kettenabbrechers auf die Uneinheitlichkeit U bekannt.

Beim Konti-Verfahren zur Herstellung von aromatischen Polycarbonaten bzw. Copolycarbonaten mit engerer Molekulargewichtsverteilung nach dem sogenannten Phasengrenzflächenverfahren. Gemäß vorliegender Erfindung erfolgt die Phosgenierung eines in wässrig-alkalischer Lösung (oder Suspension) vorgelegten Dinatriumsalzes eines Gemisches verschiedener Bisphenole in Gegenwart eines inerten organischen Lösungsmittels bzw. bevorzugt eines Lösungsmittelgemisches, welches eine zweite Phase ausbildet. Die entstehenden, hauptsächlich in der organischen Phase vorliegenden Oligocarbonate werden mit Hilfe geeigneter Katalysatoren zu, in der organischen Phase gelösten, Copolycarbonaten mit dem gewünschten Molekulargewicht aufkondensiert. Die organische Phase wird schließlich abgetrennt und das Copolycarbonat durch verschiedene Aufarbeitungsschritte, bevorzugt durch Ausdampfextruder bzw. Strangverdampfer, daraus isoliert. Der entscheidende Schritt zur Erlangung von Produkten mit verbesserter Wärmeformbeständigkeit besteht darin, dieses kontinuierliche Verfahren so auszuführen, dass eine möglichst enge Molekulargewichtsverteilung des Polycarbonates, d.h. geringe Uneinheitlichkeit, bereits bei der Synthese und ohne spezielle Aufarbeitung, wie z.B. Fällung oder Sprühverdampfung, erhalten wird. Dies wird erfindungsgemäß durch die geeignete Wahl des Kettenabbrechers erreicht, der zu einer geringeren Uneinheitlichkeit führt.

Für die Herstellung der erfindungsgemäßen Copolycarbonate wird als Diphenol abgeleitet von Formel (2) bevorzugt 1,1-Bis-(4-hydroxyphenyl)-3,3,5-trimethylcyclohexan (Bisphenol TMC) sowie 1,1-Bis-(3-methyl-4-hydroxyphenyl)-3,3,5-trimethylcyclohexan (Dimethyl TMC) eingesetzt.

Für die Herstellung der erfindungsgemäß zu verwendenden Copolycarbonate geeignete Diphenole der Formel (3) sind beispielsweise Bis-(hydroxyphenyl)-alkane, sowie deren alkylierte, kernalkylierte und kernhalogenierte Verbindungen.

Bevorzugte Diphenole sind 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan , 2,4-Bis-(4-hydroxyphenyl)-2-methylbutan, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, 2,4-Bis-(3,5-dimethyl-4-hydroxyphenyl)-2-methylbutan, schmolzenem Bisphenol ausgehen. Das eingesetzte Natriumhydroxid bzw. die Natronlauge kann nach dem Amalgamverfahren oder dem sogenannten Membranverfahren hergestellt worden sein. Beide Verfahren werden seit langer Zeit benutzt und sind dem Fachmann geläufig. Bevorzugt wird Natronlauge aus dem Membranverfahren verwendet.

Die so angesetzte wässrige Phase wird zusammen mit einer organischen Phase bestehend aus Lösungsmitteln für Polycarbonat, die gegenüber den Reaktanten inert sind und eine zweite Phase bilden, phosgeniert.

Die gegebenenfalls praktizierte Dosierung von Bisphenol nach oder während der Phosgeneinleitung kann so lange durchgeführt werden, wie Phosgen in der Reaktionslösung vorhanden ist oder dessen unmittelbare Folgeprodukte, die Chlorkohlensäureester.

Die Synthese von Copolycarbonaten aus Bisphenolen und Phosgen im alkalischen Milieu ist eine exotherme Reaktion und wird in einem Temperaturbereich von -5° C bis 100° C, bevorzugt 15°C bis 80°C, ganz besonders bevorzugt 25-65°C durchgeführt, wobei je nach Lösungsmittel oder Lösungsmittelgemisch gegebenenfalls unter Überdruck gearbeitet werden muss.

Die organische Phase kann aus einem oder Mischungen mehrerer Lösungsmittel bestehen, wobei Mischungen bevorzugt sind. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch oder zusätzlich oder im Gemisch mit chlorierten Kohlenwasserstoffen verwendet werden. Eine andere Ausführungsform der Synthese verwendet Lösungsmittel welche Polycarbonat nicht lösen sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3/1,4-Dioxan oder 1,3-Dioxolan verwendet werden können, wenn der Lösungsmittelpartner die zweite organische Phase bildet. Bevorzugt sind jedoch Gemische aus Methylenchlorid und Chlorbenzol mit einem Mischungsverhältnis (Gewichtsverhältnis) von 60:40 bis 55:45.

Die beiden Phasen die das Reaktionsgemisch bilden werden gemischt, um die Reaktion zu beschleunigen. Das geschieht durch Eintrag von Energie über Scherung, d.h. Pumpen oder Rührer oder durch statische Mischer bzw. durch Erzeugung turbulenter Strömung mittels Düsen und/oder Blenden. Auch Kombinationen dieser Maßnahmen werden angewendet, oft auch wiederholt in zeitlicher oder apparativer Abfolge. Als Rührer werden bevorzugt Anker-, Propeller-, MIG-Rührer, usw. eingesetzt, wie sie z.B. im Ullmann, "Encyclopedia of Industrial Chemistry", 5. Auflage, Vol B2 , S. 251 ff. beschrieben sind. Als Pumpen werden Kreiselpumpen, oft auch mehrstufige, wobei 2- bis 9-stufige bevorzugt sind, eingesetzt. Als Düsen und/oder Blenden werden Lochblenden bzw. an deren Stelle verjüngte Rohrstücke oder auch Venturi- oder Lefosdüsen eingesetzt.

Der Eintrag des Phosgens kann gasförmig oder flüssig oder gelöst in Lösungsmittel erfolgen. Der verwendete Überschuss an Phosgen, bezogen auf die Summe der eingesetzten Bisphenole liegt zwischen 3 und 100 Mol % bevorzugt zwischen 5 und 50 Mol %. Wobei über einmalige oder mehrfache Nachdosierung von Natronlauge oder entsprechende Nachdosierung von Bisphenolatlösung der pH-Wert der wässrigen Phase während und nach der Phosgendosierung im alkalischen Bereich, bevorzugt zwischen 8,5 und 12 gehalten wird, während er nach der Katalysatorzugabe bei 10 bis 14 liegen sollte. Die Temperatur während der Phosgenierung beträgt 25 bis 85°C, bevorzugt 35 bis 65°C, wobei je nach verwendetem Lösungsmittel auch unter Überdruck gearbeitet werden kann.

Die Phosgendosierung kann direkt in das beschriebene Gemisch der organischen und wässrigen Phase erfolgen oder aber auch ganz oder teilweise, vor der Mischung der Phasen, in eine der beiden Phasen, die anschließend mit der entsprechenden anderen Phase gemischt wird. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von 1 Sekunde bis 5 min, bevorzugt 3 Sekunden bis 2 Minuten dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgeführten Teilstrom gemischt. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung eingehalten werden.

Die Durchführung der Copolycarbonatsynthese erfolgt kontinuierlich. Die Reaktion kann in daher in Umpumpreaktoren, Rohrreaktoren, oder Rührkesselkaskaden oder deren Kombinationen erfolgen, wobei durch Verwendung der bereits erwähnten Mischorgane sicherzustellen ist, daß wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Die zur Regelung des Molekulargewichtes benötigten monofunktionellen Kettenabbrecher der Formel 1 bzw. Gemische hieraus, werden als solche oder in Form ihrer Chlorkohlensäureester, entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

Die Menge an einzusetzenden Kettenabrecher beträgt 0,5 Mol-% bis 10 Mol-%, bevorzugt 1 Mol-% bis 8 Mol-%, besonders bevorzugt 2 Mol-% bis 6 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.%-ig).

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin, besonders bevorzugt Triethylamin und N-Ethylpiperidin. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen, insofern sie eingelegt werden, zwischen 10 Sekunden und 60 Minuten, bevorzugt zwischen 30 sec. und 40 Minuten, besonders bevorzugt zwischen 1 und 15 min. Diese erfolgen dann in Verweilreaktoren.

Das ausreagierte, höchstens noch Spuren an (<2 ppm) Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wäßrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wäßrige Phase gegebenenfalls wieder der Synthese zugeführt wird.

Die organische, das Polymer enthaltende Phase muss nun von allen Kontaminationen alkalischer, ionischer oder katalytischer Art gereinigt werden.
Die organische Phase enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie den Katalysator, in der Regel ein tert. Amin.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen. Weiterhin wird die organische Phase mit entsalztem oder destilliertem Wasser wiederholt gewaschen. Die Abtrennung der, gegebenenfalls mit Teilen der wäßrigen Phase dispergierten, organischen Phase nach den einzelnen Waschschritten geschieht mittels Absetzkessel, Rührkessel, Coalescer oder Separatoren bzw. Kombinationen aus diesen Massnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene gereinigte Polymerlösung sollte nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polymers aus der Lösung kann durch Verdampfen des Lösungsmittels mittels Temperatur, Vakuum oder eines erhitzten Schleppgases erfolgen.

Geschieht die Konzentrierung der Polymerlösung und eventuell auch die Isolierung des Polymeren durch Abdestillation des Lösungsmittels, gegebenenfalls durch Überhitzung und Entspannung, so spricht man von einem 'Flash-Verfahren" siehe auch "Thermische Trennverfahren", VCH Verlagsanstalt 1988, S. 114; wird statt dessen ein geheiztes Trägergas zusammen mit der einzudampfenden Lösung versprüht, so spricht man von einer 'Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polymerschmelzen. Bei dem bekannten Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschliessend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen sondern bevorzugt ein zwei- bis vierstufiges Verfahren zu wählen.

Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207) , entfernt werden, alternativ auch durch anschließende Kristallisation (DE-A 34 29 960) und Ausheizen der Reste des Lösungsmittels in der festen Phase (US-A 3 986 269, DE-A 20 53 876).

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Abkühlung, Abspinnung, Granulierung und der anschließende Transport oder die Förderung des Granulates mit Gas oder Flüssigkeit, und die anschließende Lagerung, gegebenenfalls nach einem Durchmischungs- oder Homogenisierungsprozeß, sind so zu gestalten, dass möglichst trotz der möglicherweise vorhandenen statischen Aufladung keine Verunreinigungen auf die Polymer-, Strang- oder Granulatoberfläche aufgebracht werden, wie beispielsweise Staub, Abrieb aus den Maschinen, aerosolartige Schmiermittel und andere Flüssigkeiten sowie Salze aus möglicherweise verwendeten Wasserbädern oder Kühlungen.

Die so erhaltenen Materialien werden wie bei der Sprühverdampfung beschrieben zu Granulat verarbeitet und gegebenenfalls additiviert.

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001" oder in WO 99/55772, S. 15-25.

Übliche Additive sind beispielsweise Füllstoffe, UV-Stabilisatoren, von Komponente B) verschiedene Thermostabilisatoren, Antistatika, Pigmente, von Komponente B) verschiedene Entformungsmittel, Fließhilfsmittel und Flammschutzmittel. Beispielsweise können Alkyl- und Arylphosphite, -phoshate, -phosphane, niedermolekulare Carbonsäureester, Halogenverbindungen, Salze, Kreide, Quarzmehl, Glas- und Kohlenstofffasern, und deren Kombinationen eingesetzt werden.

Desweiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen Co-Polycarbonate und Co-Polycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die so erhältlichen Co-Polycarbonate mit enger Molekulargewichtsverteilung gemäß vorliegender Erfindung und daraus erhältliche Co-Polycarbonat-Zusammensetzungen, können zur Herstellung von Extrudaten (Platten, Folien und deren Laminate; z. B. für Kartenanwendungen und Rohre) und Formkörpern (Flaschen), insbesondere solchen zur Verwendung im transparenten Bereich, besonders im Bereich optischer Anwendungen wie z.B. Platten, Stegplatten, Verglasungen, Streu- oder Abdeckscheiben, Lampenabdeckungen, Kunststoffabdeckscheiben, Lichtleitelemente oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen sowie Datenträger für near-field-Optiken eingesetzt werden, sowie zur Herstellung von Gegenständen für den E/E und IT-Bereich.

Die Co-Polycarbonat-Zusammensetzungen werden insbesondere zur Herstellung von Compounds, Blends und Bauteilen verwendet, bei denen thermische und mechanische Eigenschaften genutzt werden, wie beispielsweise Gehäuse, Gegenstände im E/E-Bereich, wie Stecker, Schalter, Platten, Lampenhalterungen, -abdeckungen, Automobilbereich wie Lampenfassungen und -abdeckungen, Verscheibungen., Medizinbereich wie Dialysatoren, Konnektoren, Hähne, Verpackung wie Flaschen, Behälter.

Die Extrudate und Formkörper bzw. Formteile aus den erfindungsgemäßen Polymeren sind ebenfalls Gegenstand der vorliegenden Anmeldung.

Weitere mögliche Anwendungen der erfindungsgemäßen Polycarbonatformmassen sind Sicherheitsscheiben, die bekanntlich in vielen Bereichen von Gebäuden, Fahrzeugen und Flugzeugen erforderlich sind, sowie als Schilde von Helmen. Herstellung von Extrusions- und Lösungsfolien für Displays oder Elektromotoren, auch Skifolien. Herstellung von Blaskörpem wie Wasserflaschen (siehe beispielsweise US-Patent 2 964 794). Herstellung von lichtdurchlässigen Platten, insbesondere von Hohlkammerplatten, beispielsweise zum Abdecken von Gebäuden wie Bahnhöfen, Gewächshäusern und Beleuchtungsanlagen. Zur Herstellung von Ampelgehäusen oder Verkehrsschildern. Zur Herstellung von Schaumstoffen (siehe beispielsweise DE-B 1 031 507). Zur Herstellung von Fäden und Drähten (siehe beispielsweise DE-B 1 137 167 und DE-A 1 785 137). Als transluzente Kunststoffe mit einem Gehalt an Glasfasern für lichttechnische Zwecke (siehe beispielsweise DE-A 1 554 020). Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 bis 10 Gew.-% MoS₂, bezogen auf Gesamtgewicht, enthalten. Optische Anwendungen, wie optische Speicher (CD, DVD), Schutzbrillen oder Linsen für Foto- und Filmkameras (siehe beispielsweise DE-A 2 701 173). Lichtübertragungsträger, insbesondere als Lichtleiterkabel (siehe beispielsweise EP-A1 0 089 801). Als Elektroisolierstoffe für elektrische Leiter und für Steckergehäuse sowie Steckverbinder. Als Trägermaterial für organische Fotoleiter. Zur Herstellung von Leuchten, z.B. Scheinwerferlampen, als sogenannte "head-lamps" oder Streulichtscheiben oder Lampenabdeckungen. Für medizinische Anwendungen, z.B. Oxygenatoren, Dialysatoren. Für Lebensmittelanwendungen, wie z.B. Flaschen, Geschirr und Schokoladenformen. Für Anwendungen im Automobilbereich, wo Kontakt zu Kraftstoffen und Schmiermitteln auftreten kann. Für Sportartikel, wie z.B. Slalomstangen. Für Haushaltsartikel, wie z.B. Küchenspülen und Briefkastengehäuse. Für Gehäuse, wie z.B. Elektroverteilerschränke, Elektrogeräte, Haushaltsgeräte, Bauteile von Haushaltsartikeln, Elektro- und Elektronikgeräten. Zur Herstellung von Motorrad- und Schutzhelmen. Automobilteile, wie Verglasungen, Armaturenbretter, Karosserieteile und Stoßdämpfer. Für sonstige Anwendungen, wie z. B. Stallmasttüren oder Tierkäfige.

### Beispiele

### Beispiel 1 bis 3:

Herstellung von Copolycarbonaten aus Bisphenol A und Bisphenol TMC: 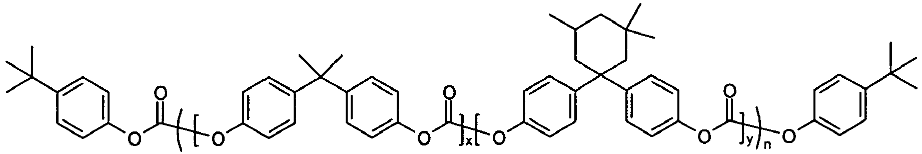 mit
x=0,4
y = 0,6 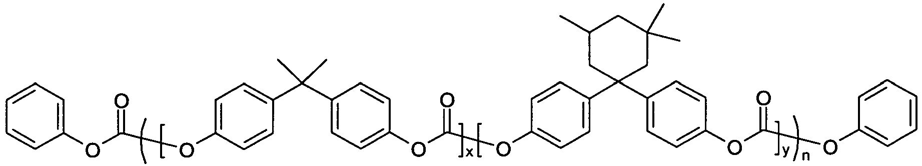 mit
x=0,4
y = 0,6

In einem kontinuierlichen Phasengrenzflächenprozess wurden verschiedene Copolycarbonate mit jeweils unterschiedlichen Molekulargewichtsverteilungen durch Variation des Kettenabbrechers (s. Tabelle 1) hergestellt. Die Zusammensetzung der Comonomere beträgt in allen Fällen Bisphenole BPA zu Bisphenol TMC im Gewichtsverhältnis 33 zu 67 Gewichts-% (d.h. Molverhältnis 40 zu 60 mol-%).

Die Reaktion wird kontinuierlich in einer Emulsion geführt, welche aus einem Lösungsmittelgemisch, zusammengesetzt aus 50,0 Gew.-% Methylenchlorid und 50,0 Gew.- % Chlorbenzol, und Wasser besteht. Als Kettenabbrecher werden p-tert-Butylphenol (BUP) und Phenol (PHE) eingesetzt. Als Katalysator wird N-Ethylpiperidin (EPP) verwendet. Die Kontireaktion wird solange betrieben, bis ausreichende Mengen an gesammelter Polycarbonatlösung entstanden ist. Diese entstehende Polycarbonatlösung wird nach Abtrennen der wässrigen Phase mit Salzsäure sauer gewaschen, und anschließen mittels Tellerseparatoren mit vollentsalztem Wasser neutral und salzfrei gewaschen. Die so gewaschenen Polycarbonatlösungen werden in einer mehrstufigen thermischen Voreindampfung bis zu einer Konzentration von 60 - 70 Gew.-% Polycarbonat aufkonzentriert. Über eine Ausdampfextruder wird das restliche Lösungsmittel abgedampft und das erhaltene Polycarbonat als Schmelzestrang gewonnen, welcher nach Abkühlung in einem Wasserbad einer Granulierung zugeführt wurde.

Folgende -Reaktionseinstellungen wurden durchgeführt (Angaben in % sind Gewichts-%, sofern nichts anderes angegeben).
- Na-Bisphenolat-Lösung: Durchsatz Mischung aus 1,270 kg/h Bisphenol A und 2,59 kg/h Bisphenol TMC in wässrig alkalischer Lösung, Konzentration 15,0 %; 2,3 mol NaOH bezogen auf ein mol Bisphenolgemsich; Durchsatz damit 25,75 kg/h Bisphenolat-Lösung
- Phosgen: 1,789 kg/h (gelöst im Lösungsmittelgemisch)
- Lösungsmittelgemisch: 24,38 kg/h
   nachdosierte Natronlauge (nach dem Umpumpreaktor): 1,27 kg/h; Konzentration 46,7 %
- Kettenabbrecher: 69,61 g/h BUP, bzw. 39,18 g/h PHE
- Katalysator EPP: 15,75 g/h; (3 % in Lösungsmittelgemisch)
- Phosgen: 130 mol-% bezogen auf die gesammte Stoffmenge Bisphenol
- EPP: 1,0 mol-% bezogen auf die gesammte Stoffmenge Bisphenol
- BUP bzw. PHE: 3,3 mol-% bezogen auf die gesammte Stoffmenge Bisphenol
- Reaktionstemperatur: 33 °C
- Polycarbonatkonzentration: 15,0 %
- V-Zahl (Viskositätszahl): 26,0 +/- 0,05
- 3-stufige Fahrweise

In der Versuchsreihe wurde der Einfluss des Kettenabbrechers bei ansonsten gleichen Reaktionseinstellungen durchgeführt. Die Zugabe des Kettenabbrechers erfolgte in der Weise, dass die Zielviskosität (bzw. V-Zahl) erreicht wurde.

Es wurden folgende Konti-Reaktionseinstellungen realisiert, wobei die Polycarbonate gemäß der Beispiele 1 bis 3 in den oben genannten Reaktionseinstellungen durchgeführt wurden. Verwendete Kettenabbrecher sind der Tabelle 1 zu entnehmen.

**Tabelle 1**

| **Beispiel** | **Lösemittel** | **Kettenabbrecher** | **Katalysator** |
|---|---|---|---|
| 1 | LMG | BUP | EPP |
| 2 | LMG | BUP | EPP |
| 3 | LMG | PHE | EPP |

| | | | |
|---|---|---|---|
| MC: Methylenchlorid MCB: Chlorbenzol LMG. Lösungsmittelgemisch (50 % MC : 50 % MCB) BUP: para-tertiär Butylphenol PHE: Phenol EPP: Ethylpiperidin | | | |

Die Tg wird nach ISO 11357, die Vicat-Temperatur nach DIN ISO 306 bestimmt. Die relative Lösungsviskosität eta rel wird bestimmt in Methylenchlorid (0,5 g Polycarbonat/l) bei 25°C. Melt Volume Rate wird bestimmt nach ISO 1133.

Dabei wurden die in Tabelle 2 aufgeführten Polycarbonate mit folgenden Eigenschaften erhalten:

**Tabelle 2**

| | | PC1 | PC2 | PC3 (Vergleich) |
|---|---|---|---|---|
| Kettenabbrecher | | BUP | BUP | Phenol |
| | | | | |
| verseifbares Chlor | ppm | 0,6 | 0,8 | 0,4 |
| phenoliches OH | ppm | 80 | 50 | 60 |
| Tg 2. Aufheizen | °C | 207,2 | 208,9 | 205,5 |
| GPC - Mw | g/mol | 30135 | 29220 | 30292 |
| GPC - Mn | g/mol | 10776 | 9716 | 9515 |
| GPC - U | | 1,8 | 2,01 | 2,18 |
| relative Viskosität 25 °C | | 1,264 | 1,258 | 1,262 |
| | | | | |
| MVR 330'C/2,16kg | ml/10min | 6,5 | 6,5 | 6,5 |
| IMVR 20' 330°C/2,16kg | ml/10min | 6,5 | 6,7 | 6,3 |
| Delta MVR / IMVR 20' | | 0,0 | 0,2 | -0,2 |
| Vicat VST B50 | °C | 204,1 | 205,2 | 201,3 |
| Vicat VST B120 | °C | 204,9 | 205,6 | 201,5 |
| Kerbschlagzähigkeit ISO 180/4A bei Raumtemperatur RT | kJ/m² | 7s | 7s | 7s |

Der Vergleich der erfindungsgemäßen Copolycarbonate PC-1 und PC-2 (Copolycarbonate aus den Bisphenolen BPA und TMC im Gewichtsverhältnis 33 zu 67 Gewichts-% (Molverhältnis 40 zu 60 mol-%) mit tert.-Butylphenol als Kettenabbrecher zeigt eine signifikant niedrigere Uneinheitlichkeit U zum Phenol-abgebrochenen Copolycarbonat PC-3 (BPA/TMC, Gewichtsverhältnis ebenfalls 33 zu 67 Gew.-%). Bei gleichem MVR (melt volume ratio) und damit identischem Verarbeitungsverhalten im Spritzgußprozeß werden deutlich erhöhte Glas- und Vicat-Temperaturen erhalten, was einer Verbesserung der Wärmeformbeständigkeit entspricht.

Umgekehrt können die gleichbleibenden thermischen und mechanischen Eigenschaften mit dem erfindungsgemäßen Verfahren bereits mit weniger des teuren Bisphenol-TMC-Bausteins erreicht werden. So kann man das Bisphenol BPA zu TMC-Verhältnis stärker in Richtung des kostengünstgen Bisphenols BPA verschieben.

## Patentansprüche

1. Copolycarbonate enthaltend als Kettenabbrecher die Struktureinheit abgeleitet von
p-*tert.* Butylphenol
und mindestens ein Diphenolbaustein der Formel (2) 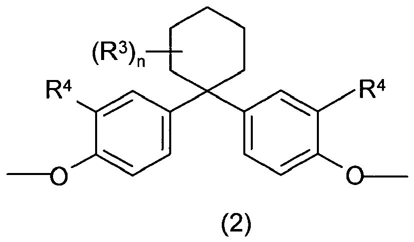 in der
R³ für C₁-C₄-Alkyl,
R⁴ für Wasserstoff oder C₁-C₄-Alkyl,
n für 0, 1, 2 oder 3 stehen,
und wenigstens einer Dihydroxyarylverbindungen solche der Formel (3)
HO-Z-OH (3)
in welcher
Z für einen Rest der Formel (3 a) steht 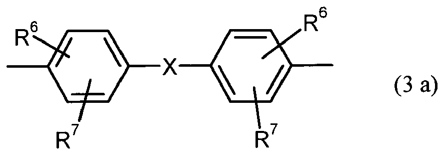 in der
R⁶ und R⁷ unabhängig voneinander für H, C₁-C₁₈-Alkyl-, C₁-C₁₈-Alkoxy, Halogen oder für jeweils gegebenenfalls substituiertes Aryl- oder Aralkyl,
X für C₁- bis C₆-Alkylen, C₂- bis C₅-Alkyliden oder für C₆- bis C₁₂-Arylen, steht.
wobei Copolycarbonate die folgenden Uneinheitlichkeiten aufweisen:
A) Copolycarbonate mit einem Gehalt ≥ 50 mol % und < 100 mol % Diphenolbaustein der Formel (2) bezogen auf die Summe der Diphenole:
für lineares CoPC mit einem mittleren Molekulargewicht (Gewichtsmittel) von 18.000 bis 35.000 g/mol beträgt U = (Mw/Mn)-1 gleich 1,3 bis 2,3,
B) Copolycarbonate mit einem Gehalt größer 0 und kleiner 50 mol % Diphenolbaustein der Formel (2) bezogen auf die Summe der Diphenole:
für lineares CoPC mit einem mittleren Molekulargewicht (Gewichtsmittel) von 16.000 bis 35.000 g/mol beträgt U = (Mw/Mn)-1 gleich 1,2 bis 2,4;
und wobei die Copolycarbonate nach einem kontinuierlichen Phasengrenzflächenverfahren hergestellt wurden.

2. Copolycarbonat gemäß Anspruch 1, wobei die Dihydroxyverbindung der Formel 3 Bisphenol A ist.

3. Copolycarbonat gemäß Anspruch 1, wobei der Diphenolbaustein Bisphenol TMC ist.

4. Copolycarbonat gemäß Anspruch 1, wobei
A) Copolycarbonate mit einem Gehalt ≥ 50 mol % und < 100 mol % Diphenolbaustein der Formel (2) bezogen auf die Summe der Diphenole:
für lineares CoPC mit einem mittleren Molekulargewicht (Gewichtsmittel) von 18.000 bis 35.000 g/mol die Uneinheitlichkeit U = (Mw/Mn)-1 gleich 1,4 bis 2,3 beträgt,
B) Copolycarbonate mit einem Gehalt größer 0 und kleiner 50 mol % Diphenolbaustein der Formel (2) bezogen auf die Summe der Diphenole:
für lineares CoPC mit einem mittleren Molekulargewicht (Gewichtsmittel) von 16.000 bis 35.000 g/mol die Uneinheitlichkeit U = (Mw/Mn)-1 gleich 1,2 bis 2,0 beträgt.

5. Copolycarbonat gemäß Anspruch 1 mit der Struktur: 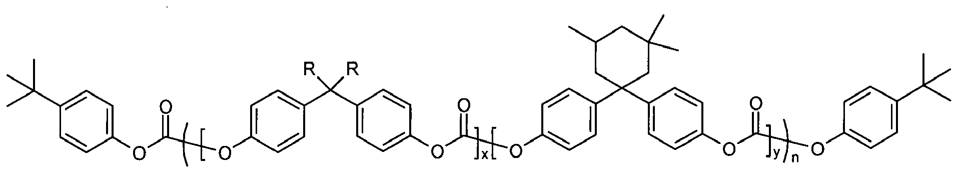 wobei
R für C₁-C₄-Alkyl,
x und y mol% der eingesetzten Bisphenole charakterisieren und somit die Summe x+y=1 ergibt und x und y unabhängig voneinander Werte von 0 bis 1 bedeuten und n durch das Molekulargewicht bestimmt ist.

6. Copolycarbonat gemäß Anspruch 5, wobei R für Methyl steht und x und y unabhängig voneinander Werte von 0,02 bis 0,98 bedeuten.

7. Zusammensetzungen enthaltend
C) Copolycarbonat gemäß Anspruch 1 und
D) mindestens ein Additiv ausgewählt aus der Gruppe bestehend aus Thermostabilisator, Entformungsmittel und UV-Stabilisator

8. Zusammensetzung gemäß Anspruch 7, enthaltend als Additive mindestens eines aus der Gruppe bestehend aus
Tris-(2,4-di-tert-butylphenyl)phosphit (Irgafos 168), Tetrakis(2,4-di-tert.-butylphenyl)[1,1biphenyl]-4,4'-diylbisphosphonit, Trisoctylphosphat, Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)-pentaerythritoldiphosphit (ADK STAB PEP-36) oder Triphenylphosphin, Pentaerythrittetrastearat, Glycerinmonostearat, Stearylstearat oder Propoandiolmono- bzw. distearat. 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine.

9. Verwendung von Copolycarbonaten bzw. Zusammensetzungen gemäß Anspruch 1 und 7 zur Herstellung von Formteilen.

10. Formteile erhältlich aus Copolycarbonaten oder Zusammensetzungen gemäß Anspruch 1 und 7.

11. Verwendung von p-*tert.* Butylphenol gemäß Anspruch 1 in einem kontinuierlichen Phasengrenzflächenverfahren zur Herstellung von Copolycarbonaten enthaltend mindestens einen Diphenolbaustein der Formel (2), 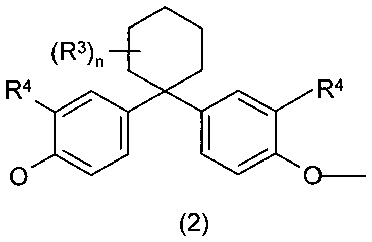 in der
R³ für C₁-C₄-Alkyl,
R⁴ für Wasserstoff oder C₁-C₄-Alkyl,
n für 0, 1,2 oder 3 stehen ,
und wenigstens einer Dihydroxyarylverbindungen solche der Formel (3)
HO-Z-OH (3)
in welcher
Z für einen Rest der Formel (3 a) steht 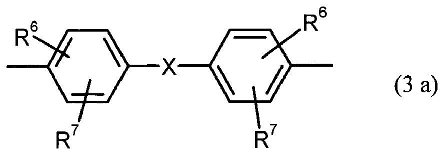 in der
R⁶ und R⁷ unabhängig voneinander für H, C₁-C₁₈-Alkyl-, C₁-C₁₈-Alkoxy, Halogen oder für jeweils gegebenenfalls substituiertes Aryl- oder Aralkyl,
X für C₁- bis C₆-Alkylen, C₂- bis C₅-Alkyliden oder für C₆- bis C₁₂-Arylen, steht.
wobei Copolycarbonate die folgenden Uneinheitlichkeiten aufweisen:
A) Copolycarbonate mit einem Gehalt ≥ 50 mol % und < 100 mol % Diphenolbaustein der Formel (2) bezogen auf die Summe der Diphenole:
für lineares CoPC mit einem mittleren Molekulargewicht (Gewichtsmittel) von 18.000 bis 35.000 g/mol beträgt U = (Mw/Mn)-1 gleich 1,3 bis 2,3,
B) Copolycarbonate mit einem Gehalt großer 0 und kleiner 50 mol % Diphenolbaustein der Formel (2) bezogen auf die Summe der Diphenole:
für lineares CoPC mit einem mittleren Molekulargewicht (Gewichtsmittel) von 16.000 bis 35.000 g/mol beträgt U = (Mw/Mn)-1 gleich 1,2 bis 2,4.

12. Verwendung von Co-Polycarbonaten bzw. Zusammensetzungen gemäß Anspruch 1 bzw. 7 zur Herstellung von Compounds und Blends.

## Claims

1. Copolycarbonates comprising as chain terminators the structural unit derived from p-tert-butylphenol
and at least one diphenol unit of the formula (2) 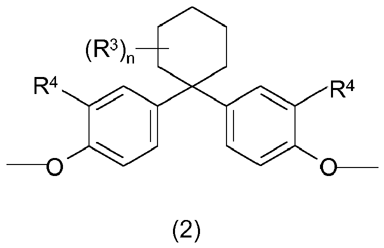 in which
R³ represents C₁-C₄-alkyl,
R⁴ represents hydrogen or C₁-C₄-alkyl,
n represents 0, 1, 2 or 3,
and at least one dihydroxyaryl compound of the formula (3)
HO-Z-OH (3)
in which
Z represents a radical of the formula (3a) 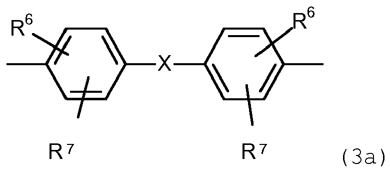 in which
R⁶ and R⁷ independently of one another represent H, C₁-C₁₈-alkyl, C₁-C₁₈-alkoxy or halogen or represent aryl or aralkyl, each of which is optionally substituted,
and
X represents C₁- to C₆-alkylene, C₂- to C₅-alkylidene or C₆- to C₁₂-arylene;
wherein copolycarbonates have the following inhomogeneity factors:
A) copolycarbonates having a content of ≥ 50 mol% and < 100 mol% of diphenol unit of the formula (2), based on the sum of the diphenols:
for linear CoPC having an average molecular weight (weight-average) of from 18,000 to 35,000 g/mol, U = (Mw/Mn)-1 is 1.3 to 2.3,
B) copolycarbonates having a content of greater than 0 and less than 50 mol% of diphenol unit of the formula (2), based on the sum of the diphenols:
for linear CoPC having an average molecular weight (weight-average) of from 16,000 to 35,000 g/mol, U = (Mw/Mn)-1 is 1.2 to 2.4;
and wherein the copolycarbonates have been prepared by a continuous phase interfacial process.

2. Copolycarbonate according to claim 1, wherein the dihydroxy compound of the formula 3 is bisphenol A.

3. Copolycarbonate according to claim 1, wherein the diphenol unit is bisphenol TMC.

4. Copolycarbonate according to claim 1, wherein
A) copolycarbonates having a content of ≥ 50 mol% and < 100 mol% of diphenol unit of the formula (2), based on the sum of the diphenols:
for linear CoPC having an average molecular weight (weight-average) of from 18,000 to 35,000 g/mol, the inhomogeneity factor U = (Mw/Mn)-1 is 1.4 to 2.3,
B) copolycarbonates having a content of greater than 0 and less than 50 mol% of diphenol unit of the formula (2), based on the sum of the diphenols:
for linear CoPC having an average molecular weight (weight-average) of from 16,000 to 35,000 g/mol, the inhomogeneity factor U = (Mw/Mn)-1 is 1.2 to 2.0.

5. Copolycarbonate according to claim 1, having the structure: 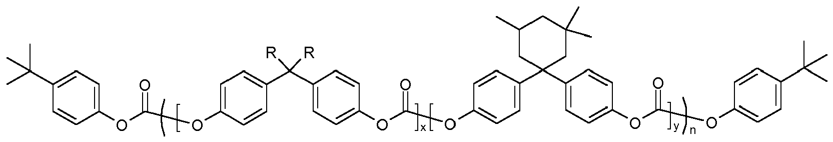 wherein
R represents C₁-C₄-alkyl,
x and y characterize the mol% of the bisphenols employed and therefore the sum of x + y = 1 is produced and x and y independently of one another denote values of from 0 to 1, and n is determined by the molecular weight.

6. Copolycarbonate according to claim 5, wherein R represents methyl and x and y independently of one another denote values of from 0.02 to 0.98.

7. Compositions comprising
C) copolycarbonate according to claim 1 and
D) at least one additive chosen from the group consisting of heat stabilizer, mould release agent and UV stabilizer.

8. Composition according to claim 7, comprising as additives at least one of the group consisting of tris-(2,4-di-tert-butylphenyl) phosphite (Irgafos 168), tetrakis(2,4-di-tert-butylphenyl)[1,1-biphenyl]-4,4'-diyl bisphosphonite, trisoctyl phosphate, octadecyl 3-(3,5-di-tert-butyl-4-hydroxyphenyl)propionate (Irganox 1076), bis(2,4-dicumylphenyl)pentaerythritol diphosphite (Doverphos S-9228), bis(2,6-di-tert-butyl-4-methylphenyl)pentaerythritol diphosphite (ADK STAB PEP-36) or triphenylphosphine, pentaerythritol tetrastearate, glycerol monostearate, stearyl stearate or propanediol mono- or distearate, 2-(2'-hydroxyphenyl)benzotriazoles, 2-hydroxybenzophenones, esters of substituted and unsubstituted benzoic acids, acrylates, sterically hindered amines, oxamides, 2-(2-hydroxyphenyl)-1,3,5-triazines.

9. Use of copolycarbonates or compositions according to claim 1 and 7 for the production of mouldings.

10. Mouldings obtainable from copolycarbonates or compositions according to claim 1 and 7.

11. Use of p-tert-butylphenol according to claim 1 in a continuous phase interfacial process for the preparation of copolycarbonates containing at least one diphenol unit of the formula (2), 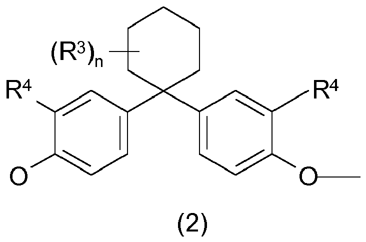 in which
R³ represents C₁-C₄-alkyl,
R⁴ represents hydrogen or C₁-C₄-alkyl,
n represents 0, 1, 2 or 3,
and at least one dihydroxyaryl compound of the formula (3)
HO-Z-OH (3)
in which
Z represents a radical of the formula (3a) 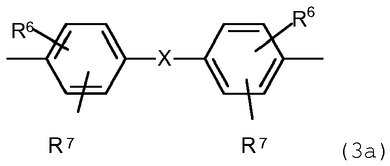 in which
R⁶ and R⁷ independently of one another represent H, C₁-C₁₈-alkyl, C₁-C₁₈-alkoxy or halogen or represent aryl or aralkyl, each of which is optionally substituted,
and
X represents C₁- to C₆-alkylene, C₂- to C₅-alkylidene or C₆- to C₁₂-arylene;
wherein copolycarbonates have the following inhomogeneity factors:
A) copolycarbonates having a content of ≥ 50 mol% and < 100 mol% of diphenol unit of the formula (2), based on the sum of the diphenols:
for linear CoPC having an average molecular weight (weight-average) of from 18,000 to 35,000 g/mol, U = (Mw/Mn)-1 is 1.3 to 2.3,
B) copolycarbonates having a content of greater than 0 and less than 50 mol% of diphenol unit of the formula (2), based on the sum of the diphenols:
for linear CoPC having an average molecular weight (weight-average) of from 16,000 to 35,000 g/mol, U = (Mw/Mn)-1 is 1.2 to 2.4.

12. Use of copolycarbonates or compositions according to claim 1 and 7 for the preparation of compounds and blends.

## Revendications

1. Copolycarbonates contenant en tant qu'agent de terminaison de chaîne l'unité structurale dérivée de
p-*tert*.-butylphénol
et au moins un constituant diphénol de formule (2) 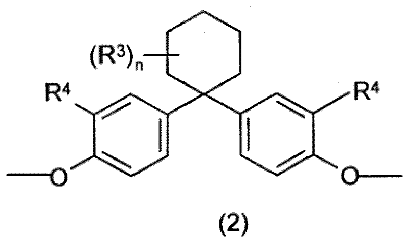 dans laquelle
R³ représente alkyle en C₁-C₄,
R⁴ représente hydrogène ou alkyle en C₁-C₄,
n représente 0, 1, 2 ou 3,
et au moins un composé de dihydroxyaryle de formule (3)
HO-Z-OH (3)
dans laquelle
Z représente un radical de formule (3a) 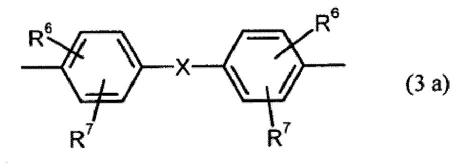
dans laquelle
R⁶ et R⁷ représentent indépendamment l'un de l'autre H, alkyle en C₁-C₁₈, alcoxy en C₁-C₁₈, halogène, ou aryle ou aralkyle, chacun éventuellement substitué,
X représente alkylène en C₁ à C₆, alkylidène en C₂ à C₅ ou arylène en C₆ à C₁₂,
les copolycarbonates présentant les hétérogénéités suivantes :
A) les copolycarbonates ayant une teneur ≥ 50 % en moles et < 100 % en moles en constituant diphénol de formule (2) par rapport à la somme des diphénols :
pour les coPC linéaires ayant un poids moléculaire moyen (moyenne en poids) de 18 000 à 35 000 g/mol, U = (Mw/Mn)-1 = 1,3 à 2,3,
B) les copolycarbonates ayant une teneur supérieure à 0 et inférieure à 50 % en moles en constituant diphénol de formule (2) par rapport à la somme des diphénols :
pour les coPC linéaires ayant un poids moléculaire moyen (moyenne en poids) de 16 000 à 35 000 g/mol, U = (Mw/Mn)-1 = 1,2 à 2,4 ;
et les copolycarbonates ayant été fabriqués par un procédé continu à l'interface de phases.

2. Copolycarbonate selon la revendication 1, dans lequel le composé dihydroxy de formule 3 est le bisphénol A.

3. Copolycarbonate selon la revendication 1, dans lequel constituant diphénol est le bisphénol TMC.

4. Copolycarbonate selon la revendication 1, dans lequel
A) les copolycarbonates ayant une teneur ≥ 50 % en moles et < 100 % en moles en constituant diphénol de formule (2) par rapport à la somme des diphénols :
pour les coPC linéaires ayant un poids moléculaire moyen (moyenne en poids) de 18 000 à 35 000 g/mol, l'hétérogénéité U = (Mw/Mn)-1 = 1,4 à 2,3,
B) les copolycarbonates ayant une teneur supérieure à 0 et inférieure à 50 % en moles en constituant diphénol de formule (2) par rapport à la somme des diphénols :
pour les coPC linéaires ayant un poids moléculaire moyen (moyenne en poids) de 16 000 à 35 000 g/mol, l'hétérogénéité U = (Mw/Mn)-1 = 1,2 à 2,0.

5. Copolycarbonate selon la revendication 1, de structure : 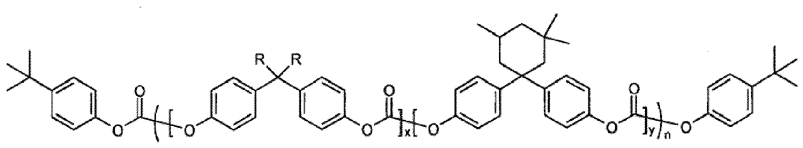 dans laquelle
R représente alkyle en C₁-C₄,
x et y caractérisent le % en moles des bisphénols utilisés et la somme x + y = 1, et x et y signifient indépendamment l'un de l'autre des valeurs de 0 à 1, et n est déterminé par le poids moléculaire.

6. Copolycarbonate selon la revendication 5, dans lequel R représente méthyle, et x et y signifient indépendamment l'un de l'autre des valeurs de 0,02 à 0, 98.

7. Compositions, contenant
C) un copolycarbonate selon la revendication 1 et
D) au moins un additif choisi dans le groupe constitué par un thermostabilisateur, un agent démoulant et un stabilisateur UV.

8. Composition selon la revendication 7, contenant en tant qu'additifs au moins un du groupe constitué par :
le tris-(2,4-di-tert-butylphényl)phosphite (Irgafos 168), le tétrakis(2,4-di-tert.-butylphényl)[1,1-biphényl]-4,4'diylbisphosphonite, le phosphate de trisoctyle, le propionate d'octadécyl-3-(3,5-di-tert-butyl-4-hydroxyphényle) (Irganox 1076), le diphosphite de bis(2,4-dicumyl-phényl)pentaérythritol (Doverphos S-9228), le diphosphite de bis(2,6-di-tert.-butyl-4-méthylphényl)-pentaérythritol (ADK STAB PEP-36) ou la triphénylphosphine, le tétrastéarate de pentaérythrite, le monostéarate de glycérine, le stéarate de stéaryle ou le mono- ou distéarate de propanediol, le 2-(2'-hydroxyphényl)benzotriazole, la 2-hydroxybenzophénone, les ester d'acides benzoïques substitués et non substitués, les acrylates, les amines à encombrement stérique, les oxamides, la 2-(2-hydroxyphényl)-1,3,5-triazine.

9. Utilisation de copolycarbonates ou de compositions selon la revendication 1 et 7 pour la fabrication de pièces moulées.

10. Pièces moulées pouvant être obtenues à partir de copolycarbonates ou de compositions selon la revendication 1 et 7.

11. Utilisation de p-*tert*.-butylphénol selon la revendication 1 dans un procédé continu à l'interface de phases pour la fabrication de copolycarbonates contenant au moins un constituant diphénol de formule (2) 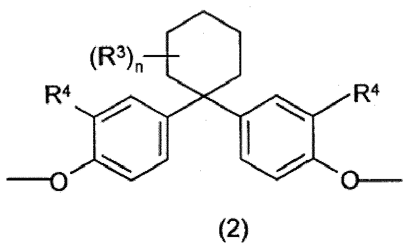 dans laquelle
R³ représente alkyle en C₁-C₄,
R⁴ représente hydrogène ou alkyle en C₁-C₄,
n représente 0, 1, 2 ou 3,
et au moins un composé de dihydroxyaryle de formule (3)
HO-Z-OH (3)
dans laquelle
Z représente un radical de formule (3a) 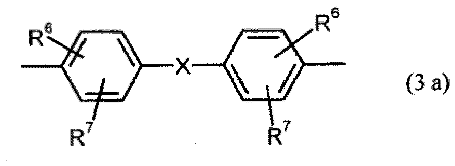
dans laquelle
R⁶ et R⁷ représentent indépendamment les uns des autres H, alkyle en C₁-C₁₈, alcoxy en C₁-C₁₈, halogène, ou aryle ou aralkyle, chacun éventuellement substitué,
X représente alkylène en C₁ à C₆, alkylidène en C₂ à C₅ ou arylène en C₆ à C₁₂,
les copolycarbonates présentant les hétérogénéités suivantes :
A) les copolycarbonates ayant une teneur ≥ 50 % en moles et < 100 % en moles en constituant diphénol de formule (2) par rapport à la somme des diphénols :
pour les coPC linéaires ayant un poids moléculaire moyen (moyenne en poids) de 18 000 à 35 000 g/mol, U = (Mw/Mn)-1 = 1, 3 à 2,3,
B) les copolycarbonates ayant une teneur supérieure à 0 et inférieure à 50 % en moles en constituant diphénol de formule (2) par rapport à la somme des diphénols :
pour les coPC linéaires ayant un poids moléculaire moyen (moyenne en poids) de 16 000 à 35 000 g/mol, U = (Mw/Mn)-1 = 1,2 à 2,4.

12. Utilisation de copolycarbonates ou de compositions selon la revendication 1 ou 7 pour la fabrication de composés et de mélanges.
